# EUROPÄISCHE PATENTSCHRIFT

(11) **EP 3 573 504 B1**
(45) Veröffentlichungstag und Bekanntmachung des Hinweises auf die Patenterteilung: **28.09.2022**
(21) Anmeldenummer: 17816678.1
(22) Anmeldetag: 11.12.2017
(51) Int. Cl.: A47J 27/09

(54) **SCHNELLKOCHTOPFDECKEL SOWIE SCHNELLKOCHTOPF**
PRESSURE COOKER LID, AND PRESSURE COOKER
COUVERCLE D'AUTOCUISEUR ET AUTOCUISEUR

(30) Priorität: 25.01.2017 DE 102017201148
(43) Veröffentlichungstag der Anmeldung: 04.12.2019
(73) Patentinhaber: WMF GmbH, 73312 Geislingen/Steige (DE)
(72) Erfinder: MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2017/082135
(87) Internationale Veröffentlichungsnummer: WO 2018/137832

(56) Entgegenhaltungen:
- EP-A1- 1 698 814
- EP-A2- 1 884 179
- DE-A1-102009 047 733
- US-A1- 2004 124 197

## Beschreibung

Die vorliegende Erfindung bezieht sich auf einen Schnellkochtopfdeckel (sowie einen mit diesem versehenen Schnellkochtopf) gemäß Anspruch 1. Solche Schnellkochtöpfe (erfindungsgemäß wird hierunter ganz allgemein ein Dampfdruckkochgefäß beinhaltend einen Deckel verstanden) sind beispielsweise aus der DE 4 315 245 A1, der EP1884179 A2, DE 10 2009 047733 A1 oder aus der DE 10 2009 013 240 A1 bekannt.

Ausgehend vom Stand der Technik ist es die Aufgabe, einen verbesserten Schnellkochtopfdeckel (und somit auch Schnellkochtopf bzw. Dampfdrucckochgefäß) zur Verfügung zu stellen, der nicht nur auf konstruktiv möglichst einfache Art und Weise hergestellt werden kann, sondern auch sämtliche für Schnellkochtöpfe vorgeschriebene Sicherungsmaßnahmen erfüllt und zudem möglichst leicht, zuverlässig und ohne Beschädigung empfindlicher Bauelemente eine Reinigung ermöglicht.

Diese Aufgabe wird gemäß des kennzeichnenden Teils aus Anspruch 1 gelöst; vorteilhafte Weiterbildungsformen lassen sich jeweils den abhängigen Ansprüchen entnehmen.

Die Grundidee der vorliegenden Erfindung basiert darauf, die Abdichtung des Schnellkochtopfdeckels bzw. (insbesondere bei einem Deckel, der einen abnehmbaren Deckelgriff aufweist) die Abdichtung zwischen Deckelgriff und Deckelkörper (also auch die Abdichtung zum Topfinneren hin) hinsichtlich ihrer Robustheit zu verbessern.

Ein erfindungsgemäßer Schnellkochtopfdeckel (dieser wird nachfolgend abgekürzt einfach auch als "Deckel" bezeichnet) lässt sich Anspruch 1 entnehmen.

Vorzugsweise ist der Deckelgriff mit dem Deckelkörper verbindbar (im druckdicht verschlossenen Zustand des Schnellkochtopfes sind also diese beiden Elemente verbunden). Der Deckelgriff (der die wesentlichen oder alle Bauteile der Kochanzeige und des Sicherheitsöffnungssystems sowie deren Abdichtsystems aufweisen kann) und der Deckelkörper zusammen formen in der Regel den Schnellkochtopfdeckel aus.

Bevorzugt ist sowohl eine Kochanzeige, als auch ein Sicherheitsöffnungssystem vorhanden (vgl. auch die nachfolgenden Ausführungsbeispiele), so dass die vorliegende Erfindung nachfolgend auf dieser Basis beschrieben wird. Grundsätzlich ist es aber auch möglich, die Erfindung mit einem Schnellkochtopfdeckel zu realisieren, der lediglich entweder eine Kochanzeige oder ein Sicherheitsöffnungssystem aufweist. Ist beides vorhanden, so sind bevorzugt die Kochanzeige und das Sicherheitsöffnungssystem mit ihrem Abdichtsystem im oder am Deckelgriff so ausgebildet, dass (in einem Zustand, bei dem der Deckelgriff mit dem Deckelkörper verbunden ist und bei dem der Deckel auf das Kochgefäß so aufgesetzt ist, dass letzteres mit dem Deckel druckdicht verschlossen ist) jeweils zumindest Abschnitte der Kochanzeige, des Sicherheitsöffnungssystems und deren Abdichtsystems durch Deckelöffnungen im Deckelkörper ins Innenvolumen des (verschlossenen) Schnellkochtopfes, in dem sich das Kochgut befindet, hineinragen. (Abgekürzt wird nachfolgend der Schnellkochtopf auch einfach als "Topf" bezeichnet).

Das Abdichtsystem der Kochanzeige und/oder des Sicherheitsöffnungssystems kann insbesondere besagte Deckelöffnungen (die der Aufnahme der Kochanzeige und/oder des Sicherheitsöffnungssystems dienen) bei mit dem Deckelkörper verbundenem Deckelgriff abdichten, also dafür Sorge tragen, dass bei druckdicht verschlossenem Topf der Kochdruck erhalten bleibt und nicht etwa über besagte Deckelöffnungen Dampf in den Außenraum des Topfes übertritt und hierdurch unerwünschterweise der Kochdruck im Topfinneren reduziert wird. Das Abdichtsystem sorgt somit insbesondere dafür, dass, wenn ein Kochdruck über dem Atmosphärendruck im Topfinneren vorliegt (wenn also der Deckel das korrespondierend mit ihm ausgebildete Kochgefäß druckdicht verschließt), dieser Kochdruck erhalten bleibt.

Bevorzugt ist dabei jeweils die "und"-Variante: Vorzugsweise sind also die Kochanzeige ebenso wie das Sicherheitsöffnungssystem vorhanden und sowohl der/die Abdichter als auch der/die Beweger des Abdichtsystems werden durch den/die Schützer gegen die Beschädigungen geschützt.

Wie bereits angedeutet, umfasst der Topf ein Kochgefäß und einen Deckel, wobei das Kochgefäß mit dem Deckel mittels eines Verschlussmechanismus (vorzugsweise: Bajonettverschluss) fluiddicht, also druckdicht, verschließbar ist. Der Kochdruck ist der bei fluiddichtem Verschluss innerhalb des Topfes herrschende Überdruck (relativ zum umgebenden Atmosphärendruck gesehen).

Der/die Abdichter kann/können (eine) Dichtmembran(en) oder auch (ein) Dichtmembranabschnitt(e) sein. Die Dichtmembran(en) oder Dichtmembranabschnitt(e) kann/können (ein) Dichtlippenring(e) sein. Der/die Abdichter kann/können an dem/den Schützer(n) - vergleiche dazu nachfolgend - befestigt sein, wobei in der Regel jedem Abdichter genau ein Schützer zugeordnet ist. Der/die Abdichter kann/können ein elastisches Material (beispielsweise Gummi oder Silikon) enthalten oder daraus bestehen. Der/die Abdichter kann/können sich an den Deckelkörper anpressen, wenn der Kochdruck herrscht, um dadurch die Fluiddichtigkeit zwischen dem Deckelgriff und dem Deckelkörper herzustellen (insbesondere auch über ein druckdichtes Verschließen besagter Deckelöffnungen).

Der/die Beweger kann/können an dem/den Schützer(n) befestigt sein, wobei in der Regel jedem Beweger genau ein Schützer zugeordnet ist. Alternativ dazu oder in Kombination damit kann/können der/die Beweger zwischen dem/den Schützer(n) (oder einem Rand bzw. Rändern davon) einerseits und (einem) Führungselement(en) andererseits form-, kraft- und/oder materialschlüssig (beispielsweise kraftschlüssig durch Einklemmen) fixiert sein. Der/die Beweger kann/können (ein) sich kochdruckabhängig entrollende(s) und wieder zusammenrollende(s) Element(e) sein oder auch (ein) Abschnitt(e), wobei diese(s) Element(e) oder diese(r) Abschnitt(e) aus einem elastischen Material (Gummi, Silikon oder dergleichen) bestehen oder ein solches Material umfassen kann. Erfindungsgemäß handelt es sich bei dem/den Beweger(n) um (eine) Rollmembran(en) oder (einen) Rollmembranabschnitt(e).

Der/die Schützer kann/können mit dem/den Abdichter(n) verbunden sein (kraft-, form- und/oder materialschlüssig, beispielsweise auch durch einstückiges Ausbilden oder auch vermittels einer Klebeschicht). Der/die Schützer deckt/decken den/die Beweger (jeweils) abschnittsweise ab oder umhüllt ihn/sie und schützt ihn/sie somit gegen mechanische Einflüsse z. B. gegen unbeabsichtigte Schläge des Deckelgriffs gegen den Deckelkörper beim Befestigen dieser beiden Elemente aneinander oder auch gegen mechanische Beschädigungen durch eine Bürste oder dergleichen beim Reinigen des Deckelgriffs in seinem vom Deckelkörper abgenommenen Zustand.

Der/die Abdichter, der/die Beweger und der/die Schützer alle zusammen genommen (gegebenenfalls auch mit dem/den Führungselement(en)) können die Kochanzeige und/oder das Sicherheitsöffnungssystem abdichten, also dafür sorgen, dass trotz der einen oder mehreren Deckelöffnung(en) der Kochdruck im Inneren des geschlossenen Topfes erhalten bleibt bzw. dass die Kochanzeige und/oder das Sicherheitsöffnungssystem ihre dem Fachmann an sich bekannten Aufgaben funktionsgerecht erfüllen können.

Der/die bewegliche(n) Körper kann/können insbesondere (ein) Stößel, (eine) Hebestange(n) oder dergleichen sein oder umfassen.

Weitere vorteilhafterweise realisierbare Merkmale lassen sich Anspruch 2 entnehmen. (Dabei gilt für alle abhängigen Ansprüche, dass - im Rahmen der Anspruchsstruktur - deren Merkmale jeweils unabhängig voneinander oder auch in Kombination miteinander realisiert werden können.)

Der/die Schützer kann/können also beispielsweise (ein) starre(r) und schlagfeste(r) Körper, beispielsweise aus Metall oder einem harten und nichtspröden Kunststoff, sein. Der/die Schützer ist/sind vorzugsweise (eine) starre Metallhülse(n) bzw. umfassen solche Hülse(n). Der/die Schützer kann/können, wenn im Topfinneren ein Kochdruck größer als der Atmosphärendruck vorliegt, gegen Abschnitte des/der elastischen Abdichter(s) gepresst werden. Dabei kann besagtes elastisches Material Gummi oder Silikon sein.

Weitere vorteilhafterweise realisierbare Merkmale lassen sich Anspruch 3 entnehmen.

Alle genannten Abschnitte können somit zusammengenommen einstückig ausgebildet werden (beispielsweise aus Gummi oder Silikon als elastischem Material). Der/die Schutzabschnitt(e) kann/können (eine) verdickte Membran(en) sein bzw. umfassen. (Eine) größere Dicke(n) von dem/den Schutzabschnitt(en) kann/können auch gegenüber der/den Wanddicke(n) von dem/den Abdichtabschnitt(en) bestehen. Somit kann das Abdichtsystem dadurch gegen die mechanischen Beschädigungen geschützt sein, dass es (eine) verstärkte, insbesondere (eine) durch Verdickung(en) verstärkte, Dichtmembran(en) ausbildet oder umfasst.

Weitere vorteilhafterweise realisierbare Merkmale lassen sich dem Anspruch 4 entnehmen.

Ebenso können die vorteilhatten Merkmale aus Anspruch 5 verwirklicht sein.

Zu jedem beweglichen Körper (s.o.) gehört dabei in der Regel genau ein Führungselement. Dabei ist in der Regel jeweils ein beweglicher Körper relativ zu seinem Führungselement (und damit auch zum Deckelgriff und, sofern der Deckelgriff gerade daran befestigt ist, auch zum Deckelkörper) beweglich ausgebildet bzw. beweglich gelagert. Eine solche Bewegung wird dabei durch eine Anderung des Kochdrucks bewirkt.

Jedes Führungselement kann eine im Wesentlichen hohlzylinderförmige Führungshülse sein, in der der zugehörige bewegliche Körper beweglich gelagert ist und relativ zu der der zugehörige bewegliche Körper kochdruckabhängig bewegt wird. Die Bewegung des beweglichen Körpers relativ zum Führungselement findet dabei (jeweils) bevorzugt senkrecht (zumindest: näherungsweise senkrecht) zur Deckelebene bzw. zur Tangente an diese Deckelebene statt (wobei die Tangente an der Position des (jeweiligen) beweglichen Körpers bestimmt werden kann).

Weitere vorteilhafterweise realisierbare Merkmale beschreibt Anspruch 6.

In diesem Fall ist also sowohl eine Kochanzeige, als auch ein Sicherheitsöffnungssystem vorhanden: Jedes dieser beiden Bauelemente hat also jeweils einen (bevorzugt: genau einen) Abdichter, jeweils einen (bevorzugt: genau einen) Beweger und jeweils einen (bevorzugt: genau einen) Schützer. Dabei kann jeder dieser (bevorzugt jeweils genau zwei) Abdichter, Beweger und Schützer wie in einem der vorangehenden Ansprüche beschrieben ausgebildet sein.

Weitere vorteilhafterweise realisierbare Merkmale lassen sich Anspruch z 7 entnehmen.

Die Doppeldichtung (die die beiden Abdichter sowie den Brückenabschnitt aufweist oder aus diesen drei Elementen besteht) kann einstückig ausgebildet sein, bevorzugt aus einem elastischen Material, wie z. B. Gummi oder Silikon. Die dann in der Regel zwei (bevorzugt: genau zwei) Schützer und die dann in der Regel zwei (bevorzugt: genau zwei) Beweger können separate Bauelemente sein. Vergleiche hierzu das nachfolgende erste Ausführungsbeispiel. Beim nachfolgenden zweiten Ausführungsbeispiel kann die Doppeldichtung (mit ihren beiden Abdichtern und ihrem Brückenabschnitt) zusammen mit den (beiden) Bewegern und den (beiden) Schützern einstückig ausgebildet sein. Dabei können die beiden Schützer wie bereits beschrieben eine größere Wandstärke (bzw. Wanddicke) aufweisen, als die beiden Beweger (und evtl. auch als die beiden Abdichter), um die gewünschte Schutzwirkung gegen die Beschädigungen zu verwirklichen.

Weitere vorteilhafterweise realisierbare Merkmale lassen sich Anspruch 8 entnehmen.

Die Positionierhilfe kann dazu dienen, einfach, schnell und zuverlässig ein richtig orientiertes Montieren der Doppeldichtung (bzw. beim zweiten Ausführungsbeispiel: des Abdichtsystems) zu ermöglichen, also ein korrektes Zuordnen von Abdichter, Beweger und Schützer der Kochanzeige zur Kochanzeige einerseits und von Abdichter, Beweger und Schützer des Sicherheitsöffnungssystems zum Sicherheitsöffnungssystem andererseits zu gewährleisten.

Weitere vorteilhafterweise realisierbare Merkmale lassen sich Anspruch 9 entnehmen.

Dies führt insbesondere dazu, dass eine optimierte Reinigung sowohl des Deckelgriffs, als auch des Deckelkörpers (bzw. der einzelnen Bauteile derselben) möglich ist.

Ein erfindungsgemäßer Schnellkochtopf ist in Anspruch 10 beschrieben.

Der erfindungsgemäße Schnellkochtopf kann dabei vorzugsweise auch die folgenden Eigenschaften aufweisen.

Wenn die beiden Griffe (Deckelgriff und Gefäßgriff) übereinanderstehen und mittels des/ihres Verschlussmechanismus korrekt verschlossen wurden, ist die Fluiddichtigkeit bzw. Druckdichtigkeit des Schnellkochtopfs hergestellt, besagter Topf also fluiddicht bzw. druckdicht verschlossen. In der Regel meint ein Übereinanderstehen der beiden Griffe ein fluchtendes Übereinanderstehen, also in Aufsicht (entlang der Topfachse gesehen) ein im Wesentlichen deckungsgleiches Übereinanderstehen der beiden in Bezug auf den eigentlichen Deckelkörper bzw. den eigentlichen Kochgefäßkörper auskragenden Griffe. Werden die beiden Griffe aus ihrer fluchtenden bzw. übereinanderstehenden Position heraus verschwenkt oder verdreht (also aus dieser Position gegeneinander um die Achse verdreht oder verschwenkt), so wird der Topf geöffnet und das Kochgut im Topfinneren wird zugänglich.

Der Verschlussmechanismus ist bzw. umfasst bevorzugt ein(en) mechanischer/n Verschluss. Bei diesem erfolgt das (korrekte) druckdichte Verschließen des Topfes vorzugsweise durch Übereinanderstellen des Deckelgriffs und des Topfgriffs wie folgt. Der Deckel einerseits und das Kochgefäß andererseits werden in der Regel (ausgehend von einer noch nicht übereinander gestellter Position beider Griffe) entlang der Achse ineinander gesteckt bzw. ineinander geschoben. Danach kann der Deckel relativ zum Kochgefäß (oder umgekehrt; entscheidend ist das entgegengesetzte Drehen bzw. Verschwenken vom Deckel und vom Kochgefäß relativ zueinander) um die Achse und in Verschlussrichtung so gedreht werden, dass die beiden Griffe in die übereinander gestellte Position überführt werden.

Durch Drehen in umgekehrter Richtung (also entgegen der vorbeschriebenen Verschlussrichtung), also durch Überführen der beiden Griffe in eine nicht übereinander gestellte Position, können der Deckel und das Kochgefäß durch Auseinanderziehen entlang der Achse auch wieder voneinander getrennt werden (Öffnen des Schnellkochtopfes).

Der Verschlussmechanismus kann insbesondere ein Bajonettverschluss sein (bzw. einen solchen umfassen). Dabei kann die Druckdichtigkeit über ein Dichtelement (beispielsweise einen umlaufenden Dichtring) des Verschlussmechanismus hergestellt werden. Der Verschlussmechanismus kann also eine Steck-Dreh-Verbindung, beispielsweise als Bajonettverschluss ausgebildet, und einen Dichtring umfassen.

Mit der vorliegenden Erfindung kann somit insbesondere ein Beschädigen von Dichtmembranen von der Kochanzeige und vom Sicherheitsöffnungssystem durch Reinigen mit groben Bürsten (oder bei einem ungeschickten Aufsetzen des Deckelgriffs auf den Deckelkörper) verhindert werden. Ebenso kann eine falsche Montage des Abdichtsystems bzw. der Doppeldichtung verhindert werden (z.B. verursacht aufgrund von unterschiedlichen Dichtlippenhöhen bedingt durch die Deckelwölbung einerseits und einer ebenen Ventilträgerplatte - diese wird nachfolgend auch als Trägerelement des Deckelgriffs bezeichnet - andererseits).

Erfindungsgemäß kann dazu das Abdichtsystem bzw. dessen Dichtmembran in drei Teile aufgeteilt sein (vgl. auch nachfolgendes erstes Ausführungsbeispiel):
1. Einen Abdichter, zum Beispiel in Form eines Dichtlippenrings, zur Abdichtung des Kochdrucks an den Deckelöffnungen.
2. Einen Schützer (beispielsweise eine Metallhülse) als hartes Bauelement zum Schutz gegen Rissbildung bei Reinigung mit groben Reinigungsmitteln und beim Aufschlagen an den Lochkanten des Deckels.
3. Eine innenliegende (kleine) Rollmembran, im Allgemeinen vorangehend als Beweger bezeichnet, die bzw. der - geschützt über ein Außengehäuse - sicher eingebaut sein kann.

Zur sicheren Montage und Positionierung können die Dichtlippenringe zu einer Doppeldichtung zusammengeführt werden, wobei diese eine Formgebung (z. B. durch eine Aussparung) aufweisen kann, die ein orientiertes, also korrektes Montieren ermöglicht.

Nachfolgend wird die vorliegende Erfindung anhand zweier Ausführungsbeispiele im Detail beschrieben. Dabei zeigen
- Figur 1:: Einen Deckelgriff aus dem Stand der Technik.
- Figuren 2 - 5:: Ein erstes erfindungsgemäßes Ausführungsbeispiel.
- Figur 6:: Ein zweites erfindungsgemäßes Ausführungsbeispiel (das grundsätzlich ähnlich wie das erste Beispiel ausgebildet ist, so dass nur die Unterschiede zum ersten Ausführungsbeispiel beschrieben werden).

Die Konfiguration des zweiten Ausführungsbeispiels ist preiswerter zu realisieren, bietet aber dennoch einen ausreichenden Schutz gegen Beschädigungen. Die Konfiguration des ersten Ausführungsbeispiels ist in der Herstellung etwas teurer, bietet aber auch einen noch besseren, optimierten Schutz gegen die Beschädigungen.

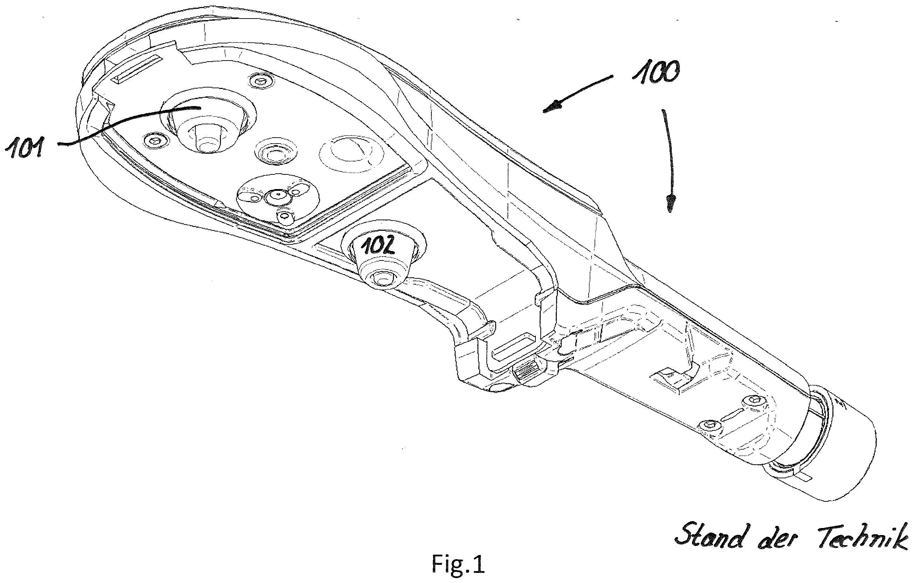

Figur 1 zeigt den Deckelgriff 100 eines Schnellkochtopfdeckels (Deckelkörper nicht gezeigt) aus dem Stand der Technik. In die Unterseite des Deckelgriffs 100 sind die Kochanzeige 101 sowie das Sicherheitsöffnungssystem 102 getrennt voneinander, also insbesondere beabstandet voneinander und mit getrennten (also beabstandet voneinander ausgebildeten) Abdichtungen realisiert. Die getrennt ausgebildeten Dichtungen der Anzeige 101 und des Öffnungssystems 102 weisen eine vergleichsweise dünne Wandstärke auf, so dass sie, z. B. beim Abbürsten zum Reinigen der gezeigten Unterseite des Deckelgriffs 100, leicht beschädigt werden können. Unter anderem dieses Problem beseitigt die vorliegende Erfindung.

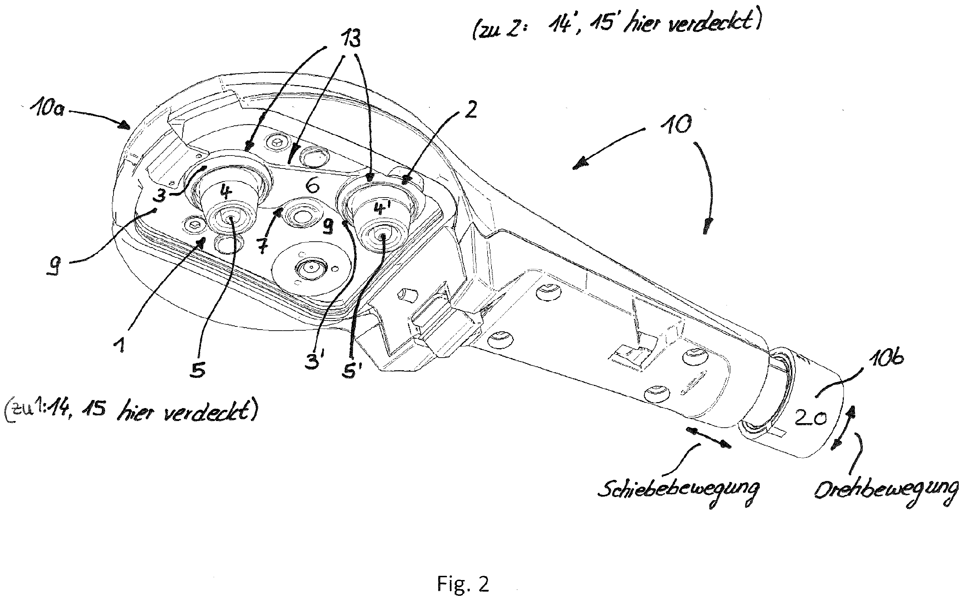

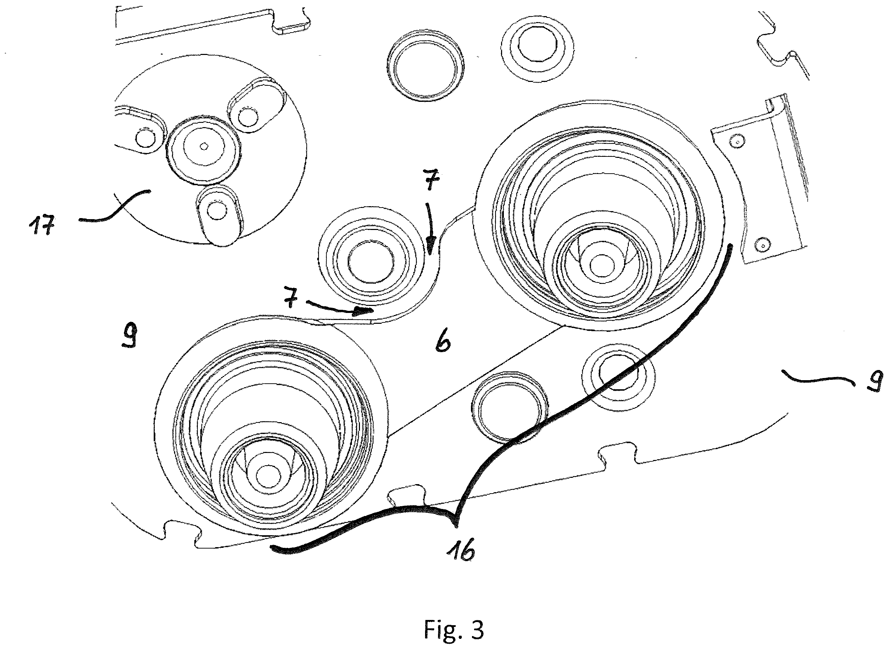

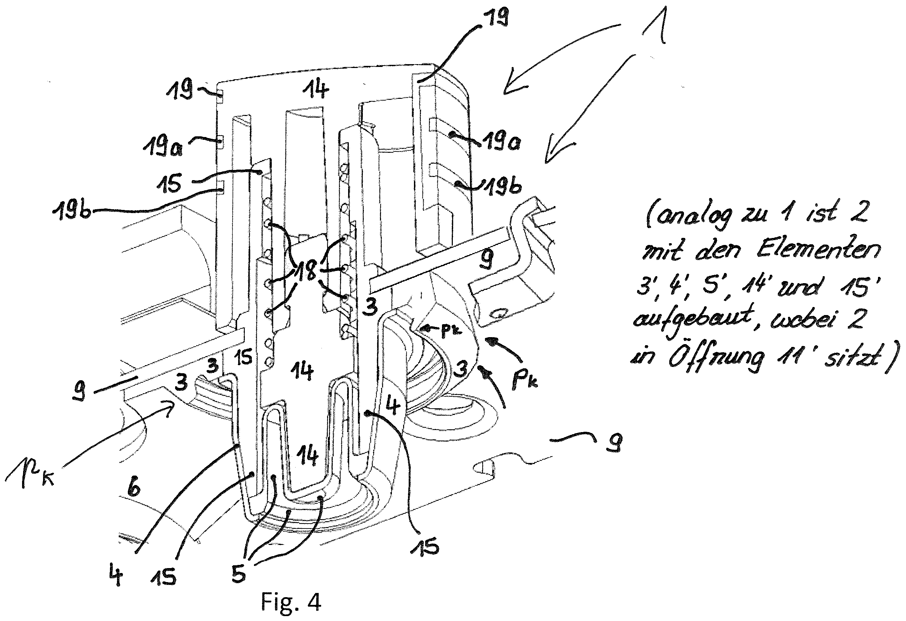

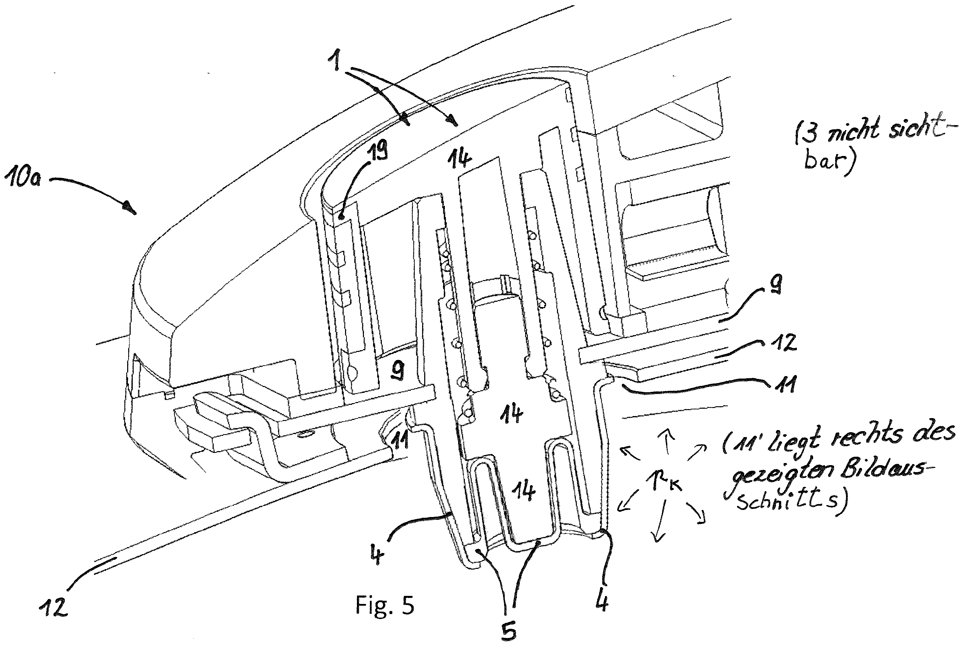

Die Figuren 2 bis 5 zeigen dazu einen erfindungsgemäßen Deckelgriff 10, Ausschnitte aus demselben sowie ausschnittsweise auch diesen Deckelgriff 10 verbunden mit dem dazu komplementären Deckelkörper 12. Figuren 2 und 3 zeigen dreidimensionale Aufsichten, während Figuren 4 und 5 Schnittansichten zeigen (so dass in den beiden letztgenannten Figuren Elemente teilweise nur angeschnitten sichtbar sind, teilweise auch gar nicht sichtbar sind). Gleiche Bezugszeichen bezeichnen jeweils identische Bauelemente.

Der erfindungsgemäße Deckelgriff 10 im ersten Beispiel weist ein dem Deckelkörper 12 zugewandtes Ende 10a und eine dem Deckelkörper 12 abgewandtes Ende (letztgenanntes kann dann vom Benutzer umfasst werden) 10b auf, vgl. Figur 2. In die dem Deckelkörper 12 bzw. dem Kochgefäß des Topfes (nicht gezeigt) zugewandte Unterseite des Deckelgriffs 10 (bzw. in die Unterseite des deckelkörperzugewandten Endes 10a) sind die Kochanzeige 1 sowie das Sicherheitsöffnungssystem 2 integriert. Beide 1, 2 sind näherungsweise identisch ausgebildet, so dass die erfindungswesentlichen Merkmale des ersten Ausführungsbeispiels vor allen Dingen anhand der Kochanzeige 1 beschrieben werden (die Bezugszeichen der Bauelemente der Kochanzeige 1 haben daher keine " ' ", die entsprechenden Bauelemente des Öffnungssystems 2 sind mit einem Apostroph " ' " versehen; teilweise sind Bauelemente in den einzelnen Figuren - dies betrifft insbesondere die Bauelemente des Sicherheitsöffnungssystem 2 - verdeckt).

Die Kochanzeige 1 umfasst unter anderem (vgl. nachfolgend) die Bauelemente (entsprechend beim zweiten Ausführungsbeispiel die Abschnitte) 3, 4, 5, 14, 15, 18 und 19. Das Sicherheitsöffnungssystem 2 umfasst entsprechend unter anderem die Bauelemente bzw. die Abschnitte 3', 4', 5', 14' und 15' sowie in ihrer Funktion den Elementen bzw. Abschnitten 18 und 19 der Anzeige 1 entsprechende Elemente bzw. Abschnitte (nicht gezeigt).

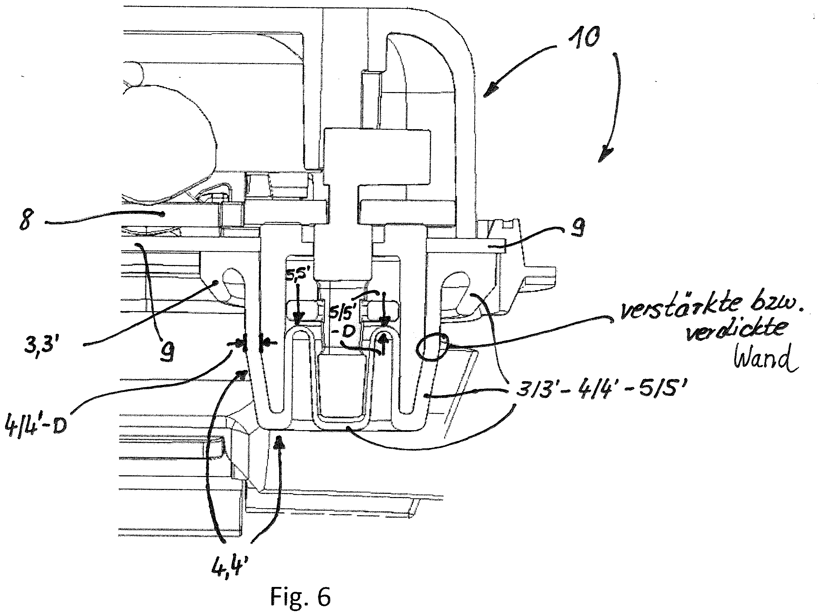

Der erfindungsgemäße Deckel bzw. Schnellkochtopf des ersten Ausführungsbeispiels verwirklicht mit dem Sicherheitsöffnungssystem 2 und dessen Stößel 14' sowie mit dem hier als Schieberelemente 8 (vgl. dazu Fig. 6 beim zweiten erfindungsgemäßen Schnellkochtopfdeckel) ausgebildeten Öffner ein Sicherheitsmerkmal, das bereits aus dem Stand der Technik bekannt ist, so dass auf dieses Sicherheitsmerkmal nur kurz eingegangen wird. Der Stößel 14' (nicht gezeigt, vgl. aber den Stößel 14 in Fig. 4) ist mechanisch mit dem Schieber 8 so gekoppelt, dass sich der Deckel (in einem Zustand, in dem der Deckelgriff 10 mit dem Deckelkörper 12 verbunden ist) nur dann öffnen lässt, wenn der Druck im Topfinneren < 0.04 bar ist. Fig. 2 zeigt, wie der sich am Ende 10b befindende Dreh- und Schiebeknopf 20 mit dem Schieber 8 gekoppelt ist. Der bewegliche Körper 14' des Sicherheitsöffnungssystems geht bei Druckanstieg nach oben. Hierdurch wird der Schieber 8 verriegelt. Ein Verschieben ist so nicht mehr möglich. Vergleiche dazu auch Fig. 6. Getrennt vom Sicherheitsöffnungssystem 2 ist in den Deckelgriff 10 eine Überdrucksicherung 17 integriert, die als Druckbegrenzungsventil dient. Über die Kochanzeige 1 ist kein Druckablass aus dem Topfinneren möglich.

Die Kochanzeige 1 sowie das Sicherheitsöffnungssystem 2 sind beabstandet voneinander in ein Trägerelement 9 integriert. Dieses Trägerelement 9 des Deckelgriffs 10 ist als ebene Platte ausgebildet und in die Unterseite des dem Deckelkörper 12 zugewandten Endes 10a des Deckelgriffs 10 integriert.

Figur 5 zeigt ausschnittsweise und am Beispiel der Kochanzeige 1, wie der Deckelgriff 10 (mit diesem Trägerelement 9) abdichtend mit dem leicht gewölbten Deckelkörper 12 druckdicht verbunden ist: Der Deckelkörper 12 weist eine Deckelöffnung 11 für die zum Deckelkörper 12 hin über die Platte des Trägerelements 9 überkragenden Teile bzw. Abschnitte der Kochanzeige 1 so auf, dass diese Teile bzw. Abschnitte durch die Öffnung 11 in das Innere des Kochgefäßes ragen (Kochgefäß hier nicht gezeigt, sondern es ist lediglich durch den Kochdruck pₖ skizziert, dass im druckdicht verschlossenen Zustand vom Topf, also vom Deckel und vom Kochgefäß, im Inneren des Topfes gegenüber dem Atmosphärendruck ein Überdruck herrscht). Entsprechend weist der Deckelkörper 12 eine Deckelöffnung 11' (nicht gezeigt) für das Öffnungssystem 2 bzw. dessen zum Topfinneren überstehende Elemente bzw. Abschnitte (vgl. z. B. die Bauelemente 3', 4' und 5' in Figur 2) auf.

Die Kochanzeige 1 umfasst einen als Dichtlippenring ausgebildeten ersten Abdichter 3, der an der Unterseite der Platte 9 in einer die Öffnung 11 umschließenden und abdichtenden Position angeordnet ist. Dieser Abdichter 3 kann form- und kraftschlüssig (z. B. über ein Einstecken in die Öffnung 11) am Trägerelement 9 fixiert werden, vgl. Figur 4, kann aber auch an der Unterseite des Trägerelements 9 festgeklebt werden. Des Weiteren umfasst die Kochanzeige 1 einen ersten Schützer 4, der hier als konus- bzw. näherungsweise kegelstumpfförmige Metallhülse ausgebildet ist. Die dem Dichtlippenring 3 zugewandte Basis der Metallhülse 4 weist eine Auskragung so auf, dass diese Basis einen größeren Außendurchmesser hat, als die lichte Innenweite (Innendurchmesser) des Dichtlippenrings 3: Wirkt im Topfinneren bei geschlossenem Topf ein Kochdruck pₖ auf den Dichtlippenring 3 sowie auf die Metallhülse 4, so wird diese Basis gegen den Dichtlippenring 3 gepresst (Abdichtwirkung zwischen den Elementen 3 und 4, vgl. Fig. 4).

Als drittes wesentliches Bauelement weist die Anzeige 1 schließlich einen ersten Beweger auf, der hier als Rollmembran 5 ausgebildet ist. Diese Rollmembran 5 ist, vgl. Figuren 4 und 5, an dem der Basis entgegengesetzten Ende der Metallhülse 4 innerhalb dieser Hülse 4 an letzterer fixiert. Die Fixierung geschieht einerseits durch eine nach innen gerichtete Überkragung der Metallhülse 4 an ihrem der Platte 9 abgewandten Ende und andererseits vermittels des der Platte 9 abgewandten Endes eines starren Führungselementes 15: Die Rollmembran 5 ist außenumfangsseitig zwischen der nach innen gerichteten Überkragung der Hülse 4 und besagtem Ende des Führungselements 15 gepresst. Bei aufgesetztem Deckelkörper 12 (in Figur 4 ist dieser nicht gezeigt, vgl. hierzu die Figur 5) wird dieses Einklemmen des außenseitigen Randes der Rollmembran 5 dadurch bewirkt, dass der Außenrand des Deckelkörpers 12 (um die Deckelöffnung 11 herum) die Basis der Metallhülse 4 gegen eine auf Höhe der Platte 9 radial gerichtete Auskragung des Führungselements 15 und gegen einen innenliegenden Abschnitt des Dichtlippenrings 3 presst (auf ein Festkleben des Dichtlippenrings 3 an der Unterseite der Platte 9 kann somit verzichtet werden zum Zwecke eines einfacheren Assemblierens der Bauteile des Deckelgriffs 10). Das Element 15 hat zu besagter Auskragung des Führungselements 15 (auf der Unterseite der Platte 9) eine korrespondierend auf der Oberseite der Platte 9 ausgebildete, weitere Auskragung: Die Platte 9 bzw. die einen Teil der Öffnung 11 ausbildende innere Umrandung der Platte 9 zwischen die beiden Auskragungen des Führungselements 15 formschlüssig ein, so dass letzteres an der Platte 9 fixiert ist und beidseits derselben vorspringt.

Wirkt im zusammengesetzten bzw. verbundenen Zustand des Griffs 10 und des Körpers 12 im Topfinneren ein Kochdruck pₖ, so legt sich ein sowohl zum Topfinneren hin, als auch radial nach innen (also zur Hülse 4 hin) überkragender Rand des Dichtlippenrings 3 an die Unterseite des Topfdeckelkörpers 12 (in Figur 4 nicht gezeigt, vgl. Figur 5) an, so dass eine vollständige Druckdichtigkeit der Kochanzeige 1 bzw. von deren Komponenten zum Außenraum des Topfes gegeben ist.

Ganz analog zur Kochanzeige 1 ist das Sicherheitsöffnungssystem 2 ausgebildet, das ebenfalls einen (zweiten) Abdichter 3' in Form eines Dichtlippenrings, einen (zweiten) Schützer 4' in Form einer Metallhülse und einen (zweiten) Beweger 5' in Form einer Rollmembran aufweist. Die Funktion des Sicherheitsöffnungssystems ist dabei ganz ähnlich wie die Funktion der Kochanzeige 1. Allerdings mit dem Unterschied, dass beim kochdruckbedingten Verschieben des Stößels 14' über die Rollmembran 5' nach topfaußwärts, also zur Deckeloberseite hin, ein Verriegeln des Öffnungssystems stattfindet (Schieber 8): Der Topfdeckel kann aufgrund der Kopplung des Stößels 14' des Sicherheitsöffnungssytems 2 an dem Schieber 8 nur dann geöffnet werden, wenn ein (eventuell höherer) Kochdruck pₖ innerhalb des Topfes zuvor durch die Überdrucksicherung 17 auf einen Wert von unter 0.04 bar verringert worden ist. Nachfolgend wird auf eine weitergehende Beschreibung der genauen Funktionsweise und des genauen Aufbaus des Sicherheitsöffnungssystems 2 verzichtet, da diese im Übrigen Funktionsweise und Aufbau der Kochanzeige 1 entsprechen.

Wie Figuren 2 und 3 zeigen, sind die beiden Dichtlippenringe 3 (der Anzeige 1) und 3' (des Öffnungssystems 2) zur Überbrückung der Distanz zwischen der Kochanzeige 1 und dem Öffnungssystem 2 über einen Brückenabschnitt 6 verbunden. Die hier jeweils aus Gummi gefertigten Abschnitte 3, 3' und 6 bilden somit einstückig ein Doppeldichtungselement 16 aus. Im Bereich des Brückenabschnitts 6 weist diese Doppeldichtung 16 an lediglich genau einem Rand der Brücke 6 eine Einkerbung 7 auf, die ein orientiertes Montieren der Doppeldichtung 16 ermöglicht, die es dem Benutzer also auf eine einfache Art und Weise ermöglicht, die Dichtlippenringe 3 und 3' der Kochanzeige 1 und dem Öffnungssystem 2 korrekt zuzuordnen.

Die Doppeldichtung 16 (mit den Abschnitten 3, 3' und 6 samt der Einkerbung 7), die beiden Metallhülsen 4, 4' (die beispielsweise aus Edelstahl ausgebildet sein können) und die beiden Rollmembranen 5, 5' sind somit hier insgesamt fünf separate Teile, die zur Abdichtung der Kochanzeige 1 und des Öffnungssystems 2 beim Zusammensetzen des Griffs 10 und des Körpers 12 zu assemblieren sind. Das Abdichtsystem 13 der Kochanzeige 1 und des Öffnungssystems 2 weist somit diese separaten Teile bzw. Elemente auf.

Figur 2 zeigt darüber hinaus eine weitere (näherungsweise rechteckförmige) Dichtung, die an der Unterseite des Deckelgriffs 10 an dessen topfmittigem Ende 10a die Doppeldichtung 16 bzw. deren Abschnitte 3, 6 und 3' sowie die Überdrucksicherung 17 umrandend positioniert ist. Diese weitere Abdichtung dient dem Zweck, den ausströmenden Dampf aus der Überdrucksicherung 17 richtungsorientiert in Richtung 10a hin abzudampfen (vom Bediener bzw. Benutzer weg).

Figuren 4 und 5 zeigen die genaue Funktionsweise der Kochanzeige 1 und des Öffnungssystems 2 am Beispiel der Kochanzeige 1. Beide Figuren zeigen dabei die Grundstellung, d. h. die Stellung der Kochanzeige 1 (bzw. von deren Stößel 14) ohne Druck im Topfinneren, d. h. wenn pₖ = 0 bar ist. Der im Inneren des im Wesentlichen hohlzylinderförmigen Führungselementes 15 positionierte Stößel 14 endet in Richtung zum Topfinneren gesehen bei fehlendem Kochdruck in etwa auf Höhe der unteren, nach innen gerichteten Überkragung der Hülse 4. Die Rollmembran 5 ist in dieser Position in Ruhestellung und der Stößel 14 in seiner unten liegenden bzw. tiefsten Position.

Das hülsenförmige Führungselement 15 ist in seiner Längsachsrichtung gesehen etwa auf mittiger Höhe am Trägerelement 9 fixiert. Aufgrund des Einpressens des Dichtlippenrings 3 zwischen dem Trägerelement 9 und dem Topfdeckelkörper 12 (vgl. Figur 5) sind somit unabhängig vom gerade herrschenden Kochdruck pₖ die folgenden Elemente feststehend: Hülse 4, innerer Abschnitt (d. h. zum Zentrum der Öffnung 11 hin gewandter Abschnitt) des Dichtlippenrings 3, Trägerelement 9, Topfdeckelkörper 12 und Führungselement 15. Ebenso feststehend ist der zwischen Abschnitte der Elemente 4 und 15 gepresste Außenrandabschnitt der Rollmembran 5.

Erhöht sich im Topfinneren der Kochdruck pₖ, so wird der Stößel 14 entlang seiner Längsachse und der damit übereinstimmenden Längsachse des Führungselements 15 (also in Richtung vom Topfinneren nach oben bzw. entlang der zentralen Topfachse gesehen nach oben) verschoben. Mit anderen Worten rollt sich die Rollmembran 5 nach oben ein, wenn der Kochdruck pₖ ansteigt und der Stößel 14 wird kochdruckbedingt und vermittels des zentralen Abschnitts der Rollmembran 5 nach oben gedrückt.

An seinem oberen Ende weist das Führungselement 15 einen nach innen gerichteten Kragen auf. Ebenso weist der Stößel 14 in seiner unteren Hälfte einen radial nach außen stehenden Kragen auf. In Längsrichtung des Führungselements 15 gesehen zwischen diesem Kragen des Elements 15 und diesem Kragen des Elements 14 ist eine Druckfeder 18 positioniert. Diese 18 sitzt also, quer zur Längsachsrichtung des Elements 15 gesehen, zwischen der Innenwand des Führungselements 15 und der Außenwand des Stößels 14. Die Feder 18 ist in der gezeigten Grundstellung der Fig. 4 und 5 nicht belastet.

Mit zunehmendem Druck pₖ wird der Stößel 14 und somit dessen obenseitiger Kochstandsanzeiger 19 immer weiter nach oben verschoben. Die Druckfeder 18 wird dabei zunehmend zusammengepresst. Deren wachsende Gegenkraft einerseits (und im Extremfall auch die Begrenzung des Weges des Stößels 14 nach oben durch ein Aneinanderstoßen von einem Kragen des Elements 15 einerseits und dem Kragen des Elements 14 andererseits, wenn die Feder 18 nahezu vollständig zusammengepresst ist) begrenzt dabei die Verschiebung des Stößels 14 nach oben bzw. sorgt für ein Kraftgleichgewicht zwischen Federkraft und Druckkraft. Andererseits lässt sich der Stößel 14 aus der gezeigten Ruheposition der Figuren 4 und 5 nicht weiter nach unten, also zum Topfinneren bewegen, da die obere Hälfte des Stößels 14 einen radial nach außen überkragenden, hutförmigen Kappenabschnitt aufweist, dessen unterer Rand in der gezeigten Ruheposition auf der Oberseite des Trägerelements 9 aufsteht.

Wie Figur 4 zeigt, hat der Kochstandsanzeiger 19 außenseitig an dieser Kappe angebrachte Stellungsanzeiger 19a und 19b, wobei der erste Stellungsanzeiger 19a dann dem Benutzer auf der Oberseite des Deckelgriffs 10 sichtbar wird, wenn im Topfinneren ein erster (durch die Federkraft einstellbarer) Kochdruck pₖ(1) > 0 herrscht. Der zweite Stellungsanzeiger 19b wird bei einem höheren Kochdruck, also bei pₖ(2) > pₖ(1) sichtbar.

Figur 6 zeigt einen zweiten erfindungsgemäßen Schnellkochtopfdeckel, dessen Unterschiede im Vergleich zum ersten Ausführungsbeispiel nachfolgend beschrieben werden (in den nicht beschriebenen Aspekten stimmen die beiden Ausführungsbeispiele somit überein). Gezeigt ist das Sicherheitsöffnungssystem sowie dessen Deckelöffnung im Deckelgriff 10. Die ebenfalls vorhandenen Bezugszeichen 3', 4' und 5' deuten jedoch an, dass (wie auch beim ersten Ausführungsbeispiel) auch hier das Sicherheitsöffnungssystem und die Kochanzeige bzw. deren Teile des Abdichtsystems analog aufgebaut sind.

Im Gegensatz zum ersten Ausführungsbeispiel bilden der Abdichter 3 (bzw. 3' beim Sicherheitsöffnungssystem - die Merkmale des Sicherheitsöffnungssystems werden nachfolgend nicht mehr erwähnt), der Beweger 5 und der Schützer 4 zusammen ein einziges, flexibles, also aus einem elastischen Material wie z. B. Gummi oder Silikon ausgebildetes Bauelement. Mit anderen Worten besteht dieses genau eine Bauelement 3/3'-4/4'-5/5' aus einem Abdichtabschnitt 3, der in einen Schutzabschnitt 4 übergeht, der wiederum in einen Bewegungsabschnitt 5 übergeht. Der Abdichtabschnitt 3 entspricht hier in Funktion, Positionierung und Ausformung im Wesentlichen dem Abdichtelement des ersten Ausführungsbeispiels. Der Bewegungsabschnitt 5 entspricht in Funktion, Positionierung und Ausformung im Wesentlichen dem Bewegungselement des ersten Ausführungsbeispiels.

In Funktion und Positionierung entspricht auch der Schutzabschnitt 4 dem Schutzelement des ersten Ausführungsbeispiels. Der Schutzabschnitt 4 ist jedoch anders aufgebaut, als das Schutzelement beim ersten Ausführungsbeispiel: Er ist aus demselben Material gebildet, wie der Abdichtabschnitt und der Bewegungsabschnitt, weist jedoch zumindest gegenüber dem Bewegungsabschnitt (hier auch gegenüber dem Abdichtabschnitt) eine größere Wandstärke auf. Die Wandstärke des Bewegungsabschnitts 5 bzw. Rollmembranabschnitts, hier bezeichnet mit 5/5'-D, beträgt hier 0.7 mm. Dagegen beträgt die Wandstärke bzw. Wanddicke 4/4'-D des Schutzabschnitts 4 hier 1.8 mm.

Die vorliegende Erfindung verwirklicht somit mit beiden Ausführungsbeispielen auf einfache und zuverlässige Art und Weise ein robusteres Abdichtsystem der Kochanzeige und/oder des Sicherheitsöffnungssystems. Während das erste Ausführungsbeispiel teurer in der Herstellung ist (aber einen optimalen Schutz bietet), ist das zweite Ausführungsbeispiel günstiger in der Herstellung (bei immer noch ausreichender Schutzwirkung gegen Beschädigung z. B. beim unbeabsichtigten Aufschlagen des Abdichtsystems auf andere Gegenstände bzw. beim unvorsichtigen Reinigen des Abdichtsystems mit einer Bürste oder dergleichen). Die Konfiguration der Doppeldichtung 16 bietet durch ihre Positionierhilfe 7 darüber hinaus die Möglichkeit, das Abdichtsystem 13 einfach, schnell und zuverlässig sowie richtig orientiert zu montieren. Hierdurch wird eine Einsparung an Montagezeit bewirkt. Besonders vorteilhaft lässt sich die vorliegende Erfindung bei Schnellkochtopfdeckeln (bzw. Schnellkochtöpfen) mit Deckelgriffen, die vom Deckelkörper abnehmbar sind, einsetzen (insbesondere bei solchen Schnellkochtopfdeckeln kommen nämlich die Benutzer auf die Idee, sämtliche Bestandteile, also auch das Abdichtsystem des Deckengriffs, reinigen zu wollen).

## Patentansprüche

1. Schnellkochtopfdeckel mit
einem Deckelgriff (10),
einem Deckelkörper (12) sowie
• einer Kochanzeige (1) und/oder einem Sicherheitsöffnungssystem (2), das/die ein Abdichtsystem (13) aufweist/aufweisen, wobei das Abdichtsystem (13) der Kochanzeige (1) und/oder des Sicherheitsöffnungssystems (2) dadurch gegen mechanische Beschädigungen geschützt ist, dass es umfasst oder besteht aus:einen/m oder mehrere(n) Abdichter(n) (3, 3') zum Abdichten von (einer) Deckelöffnung(en) (11, 11') im Deckelkörper (12) gegen einen Kochdruck (Pk),
• einen/m oder mehrere(n) Beweger(n) (5, 5'), der/die (einem) beweglichen Körper(n) (14, 14') der Kochanzeige (1) und/oder des Sicherheitsöffnungssystems (2) (eine) durch eine Änderung des Kochdrucks (pₖ) induzierte Bewegung(en) ermöglicht/ermöglichen, und
• einen/m oder mehrere(n) Schützer(n) (4, 4'), der/die den/die Beweger (5, 5'), gegen die Beschädigungen schützt/schützen und wobei es sich bei dem/den Beweger(n) um (eine) Rollmembran(en) oder (einen) Rollmembranabschnitt(e) handelt und der/die Schützer (4, 4') den/die Beweger (5,5') abschnittsweise abdeckt/ abdecken oder auch umhüllt/ umhüllen und somit gegen mechanische Einflüsse schützt/schützen.

2. Schnellkochtopfdeckel nach dem vorhergehenden Anspruch
***dadurch gekennzeichnet, dass***
zumindest der/die Beweger (5, 5') und der/die Schützer (4, 4'), gegebenenfalls sowohl der/die Abdichter (3, 3') als auch der/die Beweger (5, 5') als auch der/die Schützer (4, 4'), jeweils als separate Bauelemente, nämlich als Abdichtelement(e) (3, 3'), Bewegungselement(e) (5, 5') und Schutzelement(e) (4, 4'), ausgebildet sind,
wobei bevorzugt
• das/die Abdichtelement(e) und das/die Bewegungselement(e) aus einem elastischen Material bestehen oder ein solches Material aufweisen und
• das/die Schutzelement(e) aus einem nicht elastischen, starren oder schlagfesten Material besteht/bestehen oder ein solches Material aufweist/aufweisen.

3. Schnellkochtopfdeckel nach einem der Ansprüche 1 oder 2
***dadurch gekennzeichnet, dass***
der/die Abdichter (3, 3'), der/die Beweger (5, 5') und der/die Schützer (4, 4') als Abschnitte, nämlich als Abdichtabschnitt(e) (3, 3'), Bewegungsabschnitt(e) (5, 5') und Schutzabschnitt(e) (4, 4'), ein und desselben Bauelements (3/3'-4/4'-5/5') ausgebildet sind,
wobei bevorzugt
• alle der genannten Abschnitte (3, 3', 4, 4', 5, 5') aus einem elastischen Material bestehen oder ein solches Material aufweisen und
• der/die Schutzabschnitt(e) (4, 4') (jeweils) eine zumindest gegenüber einer Wanddicke (5/5'-D) des/der Bewegungsabschnitts/e (5, 5') größere Wanddicke (4/4'-D) aufweist/aufweisen.

4. Schnellkochtopfdeckel nach dem vorhergehenden Anspruch
***dadurch gekennzeichnet, dass***
der/die Schutzabschnitt(e) (4, 4') (jeweils) eine Wanddicke (4/4'-D) von größer gleich 1 mm, bevorzugt von größer gleich 1.2 mm, bevorzugt von größer gleich 1.5 mm, bevorzugt von ≥ 1.8 mm, bevorzugt von ≥ 2.0 mm, aufweist/aufweisen
und/oder
dass der/die Bewegungsabschnitt(e) (5, 5') (jeweils) eine Wanddicke (5/5'-D) von kleiner gleich 0.8 mm, bevorzugt von größer gleich 0.5 mm sowie kleiner gleich 0.8 mm, aufweist/aufweisen.

5. Schnellkochtopfdeckel nach einem der vorhergehenden Ansprüche
***dadurch gekennzeichnet, dass***
das Abdichtsystem (13) (ein) im oder am Deckelgriff (10) befestigte(s) Führungselement(e) (15, 15') umfasst.

6. Schnellkochtopfdeckel nach einem der vorhergehenden Ansprüche
***gekennzeichnet durch***
die Kochanzeige (1) und das Sicherheitsöffnungssystem (2), die das Abdichtsystem (13) aufweisen, das dadurch gegen die mechanischen Beschädigungen geschützt ist, dass es (13) umfasst oder besteht aus:
• einen/m Abdichter (3) der Kochanzeige (1) und einen/m Abdichter (3') des Sicherheitsöffnungssystems (2), jeweils zum Abdichten einer Deckelöffnung (11, 11') im Deckelkörper (12) gegen einen/den Kochdruck (pₖ) ausgebildet,
• einen/m Beweger (5) der Kochanzeige (1) und einen/m Beweger (5') des Sicherheitsöffnungssystems (2), jeweils einem beweglichen Körper (14, 14') der Kochanzeige (1) bzw. des Sicherheitsöffnungssystems (2) eine durch eine Änderung des Kochdrucks (pₖ) induzierte Bewegung ermöglichend,
und
• einen/m Schützer (4) der Kochanzeige (1) und einen/m Schützer (4') des Sicherheitsöffnungssystems (2), jeweils einen Abschnitt des Abdichtsystems (13), insbesondere jeweils einen der Abdichter (3, 3') und dessen Beweger (5, 5'), gegen die Beschädigungen schützend.

7. Schnellkochtopfdeckel nach dem vorhergehenden Anspruch
***dadurch gekennzeichnet, dass***
der Abdichter (3) der Kochanzeige (1) und der Abdichter (3') des Sicherheitsöffnungssystems (2) zusammen mit einem diese beiden Abdichter (3, 3') verbindenden Brückenabschnitt (6) eine Doppeldichtung (16) ausbilden.

8. Schnellkochtopfdeckel nach dem vorhergehenden Anspruch
***dadurch gekennzeichnet, dass***
der Brückenabschnitt (6) mit einer Positionierhilfe (7), insbesondere einer Aussparung oder einer Auskragung, versehen ist.

9. Schnellkochtopfdeckel nach einem der vorhergehenden Ansprüche
***dadurch gekennzeichnet, dass***
der Deckelgriff (10) vom Deckelkörper (12) abnehmbar ist.

10. Schnellkochtopf mit
einem Schnellkochtopfdeckel gemäß einem der vorhergehenden Ansprüche und
einem Kochgefäß, das einen Gefäßgriff aufweist,
wobei der Deckelgriff (10) und der Gefäßgriff korrespondierend zueinander so ausgebildet sind, dass das Kochgefäß mit dem Schnellkochtopfdeckel mittels eines Verschlussmechanismus fluiddicht verschließbar ist, indem der Deckelgriff (10) und der Gefäßgriff übereinander gestellt werden.

## Claims

1. A pressure cooker lid comprising:
a lid handle (10),
a lid body (12) and
• a cooking indicator (1) and/or a safety opening system (2) comprising a sealing system (13), wherein the sealing system (13) of the cooking indicator (1) and/or of the safety opening system (2) is protected against mechanical damage by comprising or consisting of: one or more sealers (3, 3') for sealing (a) lid opening(s) (11, 11') in the lid body (12) against a cooking pressure (pₖ),
• one or more mover(s) (5, 5') enabling movement(s) of (a) movable body/bodies (14, 14') of the cooking indicator (1) and/or the safety opening system (2) induced by a change in cooking pressure (pₖ), and
• one or more protector(s) (4, 4'), which protect(s) the mover(s) (5, 5') against damage, and
wherein the mover(s) is/are (a) rolling membrane(s) or rolling membrane section(s) and the protector(s) (4, 4') cover(s) the mover(s) (5, 5') section by section or also envelop(s) and thus protect(s) against mechanical influences.

2. The pressure cooker lid according to the preceding claim,
***characterized in that***
at least the mover(s) (5, 5') and the protector(s) (4, 4'), optionally both the sealing element(s) (3, 3') and the mover(s) (5, 5') and the protector(s) (4, 4'), are each designed as separate structural elements, namely as sealing element(s) (3, 3'), moving element(s) (5, 5') and protective element(s) (4, 4'),
wherein preferably
• the sealing element(s) and the moving element(s) are made of or comprise an elastic material, and
• the protective element(s) is/are made of or comprise a non-elastic, rigid or impact-resistant material.

3. The pressure cooker lid according to one of claims 1 or 2
***characterized in that***
the sealer(s) (3, 3'), the mover(s) (5, 5') and the protector(s) (4, 4') are formed as sections, namely as sealing section(s) (3, 3'), moving section(s) (5, 5') and protecting section(s) (4, 4'), of one and the same structural element (3/3'-4/4'-5/5'),
wherein preferably
• all of said section (3, 3', 4, 4', 5, 5') are made of or comprise an elastic material, and
• the protective section(s) (4, 4') (each) has/have a wall thickness (4/4'-D) which is greater at least than a wall thickness (5/5'-D) of the moving section(s) (5, 5').

4. The pressure cooker lid according to the preceding claim,
***characterized in that***
the protecting section(s) (4, 4') (each) has/have a wall thickness (4/4'-D) of greater than or equal to 1 mm, preferably of greater than or equal to 1.2 mm, preferably of greater than or *equal to* 1.5 mm, preferably of ≥ 1.8 mm, preferably of ≥ 2.0 mm
and/or
**in that** the movement section(s) (5, 5') (each) has/have a wall thickness (5/5'-D) of less than or equal to 0.8 mm, preferably of greater than or equal to 0.5 mm and less than or equal to 0.8 mm.

5. The pressure cooker lid according to any one of the preceding claims
***characterized in that***
the sealing system (13) comprises (a) guide element(s) (15, 15') fastened in or to the lid handle (10).

6. The pressure cooker lid according to any one of the preceding claims
***characterized by***
the cooking indicator (1) and the safety opening system (2) comprising the sealing system (13), which is protected against mechanical damage by comprising (13) or consisting of:
• a seal (3) of the cooking indicator (1) and a seal (3') of the safety opening system (2), each for sealing a lid opening (11, 11') in the lid body (12) against a/the cooking pressure (pk),
• a mover (5) of the cooking indicator (1) and a mover (5') of the safety opening system (2), each allowing a movement of a movable body (14, 14') of the cooking display (1) and the safety opening system (2), respectively, induced by a change in cooking pressure (pₖ),
and
• a protector (4) of the cooking indicator (1) and a protector (4') of the safety opening system (2), each protecting a section of the sealing system (13), in particular one of each of the sealers (3, 3') and its movers (5, 5'), against the damages.

7. The pressure cooker lid according to the preceding claim,
***characterized in that***
the seal (3) of the cooking indicator (1) and the seal (3') of the safety opening system (2) together with a bridge section (6) connecting these two seals (3, 3') form a double seal (16).

8. The pressure cooker lid according to the preceding claim,
***characterized in that***
the bridge section (6) is provided with a positioning aid (7), in particular a recess or a projection.

9. The pressure cooker lid according to any one of the preceding claims
***characterized in that***
the lid handle (10) is removable from the lid body (12).

10. A pressure cooker comprising:
a pressure cooker lid according to any one of the preceding claims, and
a cooking vessel that has a vessel handle,
wherein the lid handle (10) and the vessel handle are formed corresponding to each other in such a way that the cooking vessel can be closed fluid-tight with the pressure cooker lid by means of a closing mechanism by placing the lid handle (10) and the vessel handle on top of each other.

## Revendications

1. Couvercle d'autocuiseur avec
une poignée de couvercle (10),
un corps de couvercle (12) ainsi que
• un indicateur de cuisson (1) et/ou un système d'ouverture de sécurité (2), qui présente/présentent un système d'étanchéité (13), dans lequel le système d'étanchéité (13) de l'indicateur de cuisson (1) et/ou du système d'ouverture de sécurité (2) est protégé contre les dommages mécaniques, par le fait qu'il comprend ou est constitué de : un ou plusieurs dispositif(s) d'étanchéité (3, 3') pour rendre étanche(s) une (des) ouverture(s) de couvercle (11, 11') dans le corps de couvercle (12) par rapport à une pression de cuisson (pₖ),
• un ou plusieurs dispositif(s) de déplacement (5, 5'), qui permet/permettent à un (des) corps mobile(s) (14, 14') de l'indicateur de cuisson (1) et/ou du système d'ouverture de sécurité (2) un (des) mouvement(s) induit(s) par une variation de la pression de cuisson (pₖ), et
• un ou plusieurs dispositif(s) de protection (4, 4'), qui protège/protègent le/les dispositif(s) de déplacement (5, 5') contre les dommages et
dans lequel le/les dispositif(s) de déplacement est(sont) une (des) membrane(s) déroulante(s) ou une (des) section(s) de membrane déroulante(s) et le/les dispositif(s) de protection (4, 4') recouvre/recouvrent par sections le/les dispositif(s) de déplacement (5, 5') ou l'enveloppe/enveloppent également et le(s) protège/protègent ainsi contre les influences mécaniques.

2. Couvercle d'autocuiseur selon la revendication précédente, ***caractérisé en ce que***
au moins le/les dispositif(s) de déplacement (5, 5') et le/les dispositif(s) de protection (4, 4'), le cas échéant aussi bien le/les dispositif(s) d'étanchéité (3, 3') que le/les dispositif(s) de déplacement (5, 5') que le/les dispositif(s) de protection (4, 4'), sont respectivement réalisés en tant que composants séparés, à savoir en tant qu'élément(s) d'étanchéité (3, 3'), élément(s) de déplacement (5, 5') et élément(s) de protection (4, 4'),
dans lequel, de préférence
• le/les élément(s) d'étanchéité et le/les élément(s) de déplacement sont constitués d'un matériau élastique ou présentent un tel matériau et
• le/les élément(s) de protection est/sont constitué(s) d'un matériau non élastique, rigide ou résistant aux chocs ou présente/présentent un tel matériau.

3. Couvercle d'autocuiseur selon l'une quelconque des revendications 1 ou 2
***caractérisé en ce que***
le/les dispositif(s) d'étanchéité (3, 3'), le/les dispositif(s) de déplacement (5, 5') et le/les dispositif(s) de protection (4, 4') sont réalisés en tant que sections, à savoir de section(s) d'étanchéité (3, 3'), de section(s) de déplacement (5, 5') et de section(s) de protection (4, 4'), d'un seul et même composant (3/3'-4/4'-5/5'),
dans lequel, de préférence
• toutes lesdites sections (3, 3', 4, 4', 5, 5') sont constituées d'un matériau élastique ou présentent un tel matériau et
• la/les section(s) de protection (4, 4') présente/présentent (respectivement) une épaisseur de paroi (4/4'-D) plus grande au moins par rapport à une épaisseur de paroi (5/5'-D) de la/des section(s) de déplacement (5, 5').

4. Couvercle d'autocuiseur selon la revendication précédente
***caractérisé en ce que***
la/les section(s) de protection (4, 4') présente/présentent (respectivement) une épaisseur de paroi (4/4'-D) supérieure ou égale à 1 mm, de préférence supérieure ou égale à 1,2 mm, de préférence supérieure ou égale à 1,5 mm, de préférence ≥ 1,8 mm, de préférence ≥ 2,0 mm
et/ou
que la/les section(s) de déplacement (5, 5') présente/présentent (respectivement) une épaisseur de paroi (5/5'-D) inférieure ou égale à 0,8 mm, de préférence supérieure ou égale à 0,5 mm ainsi qu'inférieure ou égale à 0,8 mm.

5. Couvercle d'autocuiseur selon l'une quelconque des revendications précédentes
***caractérisé en ce que***
le système d'étanchéité (13) comprend un (des) élément(s) de guidage (15, 15') fixé(s) dans ou sur la poignée du couvercle (10).

6. Couvercle d'autocuiseur selon l'une quelconque des revendications précédentes
***caractérisé par***
l'indicateur de cuisson (1) et le système d'ouverture de sécurité (2), qui présentent le système d'étanchéité (13), qui est protégé contre les dommages mécaniques par le fait qu'il (13) comprend ou est constitué de :
• un dispositif d'étanchéité (3) de l'indicateur de cuisson (1) et un dispositif d'étanchéité (3') du système d'ouverture de sécurité (2), respectivement réalisés pour rendre étanche une ouverture de couvercle (11, 11') dans le corps de couvercle (12) par rapport à une/la pression de cuisson (pₖ),
• un dispositif de déplacement (5) de l'indicateur de cuisson (1) et un dispositif de déplacement (5') du système d'ouverture de sécurité (2), permettant respectivement à un corps mobile (14, 14') de l'indicateur de cuisson (1) ou du système d'ouverture de sécurité (2) un mouvement induit par une variation de la pression de cuisson (pₖ), et
• un dispositif de protection (4) de l'indicateur de cuisson (1) et un dispositif de protection (4') du système d'ouverture de sécurité (2), protégeant respectivement une section du système d'étanchéité (13), en particulier respectivement l'un des dispositifs d'étanchéité (3, 3') et son dispositif de déplacement (5, 5'), contre les dommages.

7. Couvercle d'autocuiseur selon la revendication précédente
***caractérisé en ce que***
le dispositif d'étanchéité (3) de l'indicateur de cuisson (1) et le dispositif d'étanchéité (3') du système d'ouverture de sécurité (2) réalisent conjointement avec une section de pont (6) reliant ces deux dispositifs d'étanchéité (3, 3') un double joint d'étanchéité (16).

8. Couvercle d'autocuiseur selon la revendication précédente
***caractérisé en ce que***
la section de pont (6) est pourvue d'une aide au positionnement (7), en particulier d'un évidement ou d'une saillie.

9. Couvercle d'autocuiseur selon l'une quelconque des revendications précédentes
***caractérisé en ce que***
la poignée de couvercle (10) peut être retirée du corps de couvercle (12).

10. Autocuiseur avec
un couvercle d'autocuiseur selon l'une quelconque des revendications précédentes et
un récipient de cuisson, qui présente une poignée de récipient,
dans lequel la poignée de couvercle (10) et la poignée de récipient sont réalisées en correspondance l'une avec l'autre, de sorte que le récipient de cuisson peut être fermé de manière étanche aux fluides avec le couvercle d'autocuiseur au moyen d'un mécanisme de fermeture, du fait que la poignée de couvercle (10) et la poignée de récipient sont placées l'une sur l'autre.
